# EUROPEAN PATENT APPLICATION

(11) **EP 2 290 794 A1**
(43) Date of publication of application: **02.03.2011**
(21) Application number: 09168870.5
(22) Date of filing: 27.08.2009
(51) Int. Cl.: H02M 3/156

(54) **Computer peripheral wireless communication device with reduced bulk capacitance**

(71) Applicant: Option, 3001 Leuven (BE)
(72) Inventor: Vercruysse, Jan, B - 3052, Blanden (BE)
(74) Representative: Sarlet, Steven Renaat Irène

(57) **Abstract**

A computer peripheral wireless communication device comprising: a power interface for connection to a complementary power interface of a host computer device; a power amplifier for amplifying transmission signals up to a desired transmission burst power level; power conversion circuitry connected between the power interface and the power amplifier and being provided for converting the input power to the supply power for the power amplifier. The power conversion circuitry comprises: a bulk capacitance for temporary power storage and releasing power towards the power amplifier on occurrence of a voltage drop as a result of the power amplifier requiring the high supply power; a boost dc-dc-converter connected between the power interface and the bulk capacitance; a buck dc-dc-converter connected between the bulk capacitance and the power amplifier.

## Description

### Technical field

The present invention relates to a computer peripheral wireless communication device according to the preamble of claim 1.

### Background art

Many types of wireless transmission, like for example EDGE but not limited thereto, have a bursty nature. Upon transmission of a burst, more power can be necessary than that which is available on the interfaces of computer devices. For example, USB power lines commonly support 500 mA at a voltage of about 5V. In practice however the voltage can be as low as 4.3 V. If more current is taken, the laptop goes into reset. The peak supply for the power amplifier (PA) of the transmission stage of an EDGE USB modem can need 2.8A for a duration of 2 timeslots (1.2msec) at a minimum voltage of about 3V. So to be able to provide sufficient power for the PA on transmission of a burst, energy is buffered during idle times into big bulk capacitors.

A disadvantage is that the big bulk capacitors are quite costly and quite bulky as well.

### Disclosure of the invention

It is an aim of the present invention to provide a computer peripheral wireless communication device in which the size of the bulk capacitance can be reduced.

This aim is achieved according to the invention with a computer peripheral wireless communication device showing the technical characteristics of the characterising part of the first claim.

As used herein, with "computer peripheral wireless communication device" is intended to mean a computer peripheral device which has an electronic interface for connection to a complementary electronic interface of a computer device (host) and which comprises electronic components for establishing communication between said computer device to which it is connected and a remote device over at least one wireless communication network. The wireless communication network can be WLAN, GSM, GPRS, UMTS, EDGE, HSUPA, HSDPA, 3G, 3.5G, 4G or any other wireless communication network known to the person skilled in the art. In preferred embodiments, the wireless modem device of the invention can have electronic components for communicating over two or more different wireless communication networks. The electronic interface can for example be a USB interface, a firewire interface, a PCI express interface, a PCMCIA interface or any other electronic interface known to the person skilled in the art.

The computer peripheral wireless communication device according to the invention comprises power conversion circuitry connected between the power interface towards the host computer and the power amplifier of the transmission stage. This power conversion circuitry converts the input power taken from the host computer to the supply power for the power amplifier. In particular, the power conversion circuitry comprises: a bulk capacitance for temporary power storage and releasing power towards the power amplifier on occurrence of a voltage drop as a result of the power amplifier requiring the high supply power, a boost dc-dc-converter connected between the power interface and the bulk capacitance and a buck dc-dc-converter connected between the bulk capacitance and the power amplifier.

The boost dc-dc converter boosts the voltage presented at its input to a higher voltage, so that a higher voltage level is available for charging the bulk capacitance. The buck dc-dc converter reduces the voltage presented at its input to a lower voltage, which has the effect that a higher voltage drop can be allowed to occur at the bulk capacitor upon supplying the power for a burst. Overall, the process can be considered as converting the voltage source, which is provided by the host computer at its interface, to a current source for the power amplifier. In view of the fact that a larger voltage drop can be allowed over the bulk capacitance, less bulk capacitance is needed, so the size of the bulk capacitor(s) can be reduced.

In preferred embodiments, the boost and buck dc-dc-converters are under control of a timing controller, which controls switching components of the boost and buck dc-dc-converters. The timing controller can for example use pulse width modulation to apply predetermined duty cycles over inductors of the dc-dc-converters, such that the desired dc-dc-conversion is achieved towards the predetermined voltage levels.

In preferred embodiments, the timing controller can control the switching components of the boost and buck dc-dc-converters such that operation of the boost converter is separate from operation of the buck converter in time. In this embodiment, a common coil can be used for both converters.

In preferred embodiments, the boost dc-dc-converter boosts an input voltage presented at its input to a charging voltage of at least twice the input voltage. The higher the charging voltage for the bulk capacitance, the smaller the bulk capacitance can be while still being capable of providing the supply power for the PA on bursts.

### Brief description of the drawings

The invention will be further elucidated by means of the following description and the appended figures.
Figure 1 schematically shows a computer peripheral wireless communication device of the prior art.
Figures 2-4 schematically show preferred embodiments of computer peripheral wireless communication devices according to the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

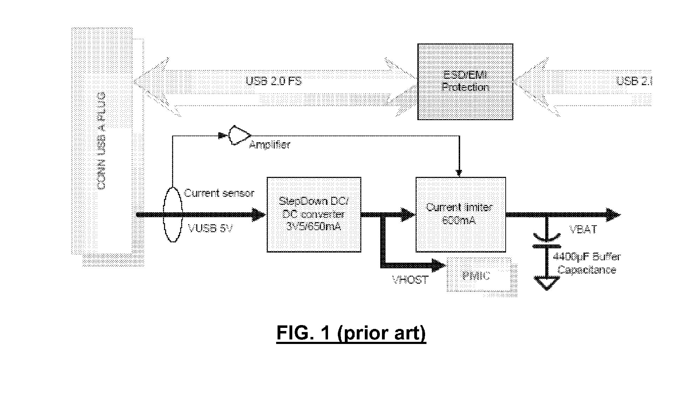

Figure 1 schematically shows a prior art implementation of a computer peripheral wireless communication device, in this case a USB (Universal Serial Bus) device. The input power for the peripheral is taken from the USB power lines. The peripheral comprises a current limiter, power down conversion and bulk capacitors of 4400µF. The disadvantage of this prior art device is that it is quite bulky, due to the large capacitance needed, and as a result quite expensive.

The peripheral of figure 1 comprises a PMIC (Power Management IC) which regulates the whole modem platform except for the power amplifier(s). In other words the PMIC keeps the firmware on the platform running. The most ideal voltage supply for a PMIC is 3.5V, which is provided by a stepdown DC/DC converter. The current sensor amplifier, the DC/DC converter and current limiter are powered directly by the USB power lines. If you go above 500mA the notebook goes normally into reset. Where that reset trigger point is, depends on the notebook manufacturer. Nevertheless, the envelope is stretched a bit what concerns the current: 650mA is allowed. This whole circuitry is meant to overcome the problem that PA's might overconsume the max allowed current, thereby leaving no power to the PMIC regulating the normal modem functionality. The circuitry with current sensor amplifier and current limiter limits the PA's to such a level that the normal modem remains functioning well.

EDGE transmission has a very bursty TDMA (time division multiplexing access architecture) nature. The peak supply for the PA needs 2.8A for a duration of 2 timeslots (1.2msec) and the minimum minimorum voltage for the PA is 3.1Volt. In the prior art like in Fig. 1 this power problem is tackled by buffering the energy during idle times (beyond burst times) into big capacitors and releasing the energy during the bursts. The bulk capacitors are just for and in front of the PA. The 2.8A is really a maximum and comes from the mismatch of PA load vs. air impedance (Voltage Standing Wave Ratio mismatch). The voltage range we get from the USB power lines is from 5V down to 4.3V. The voltage during the bursts is setting off from 3.6V and is dropping to 3.1V by draining the bulk capacitors. So the droop (as they call it) is 0.5V. The 4.4 mF bulk capacitors can sustain a current of 2.8A.

Disadvantages of a USB stick solution like shown in figure 1 are the size and cost of the capacitors.

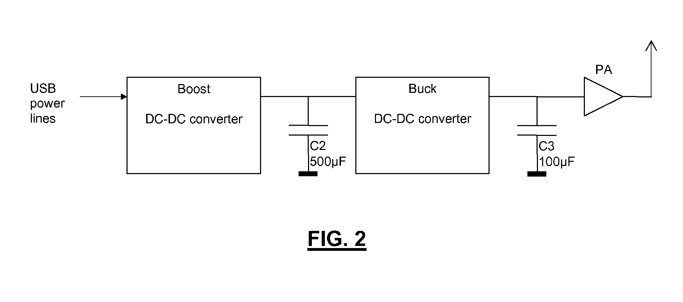

Embodiments of peripherals according to the invention are schematically shown in figures 2-4. In each, the bulk capacitance (C2) is moved in front of the buck DC-DC converter.

In the drawings, only one power amplifier (PA) is shown. The peripherals according to the invention may however have up to 4 PAs: 1 Quad Band EDGE PA and 1 UMTS PA for each of the 3 UMTS bands; or even more PAs.

In the embodiment of figure 2, the buck DC-DC converter preferably has an input range of 10V to 3.6V and an output range of 3.2V down to 3.1V. So in this embodiment, there is still a voltage drop (or "droop") seen by the PA during bursts, but only 0.1 V. The voltage drops because of the high currents needed by the PA and the buck DC-DC converter can not keep up with supplying enough current to restore the voltage output to nominal. But the PA does not experience a lot of trouble with this small droop. The DC-DC converter has not as such a control input, the only task is to maintain an output voltage of about 3.2V.

In the prior art (fig. 1) a lot of energy stored in the bulk capacitors is not used: they are charged up to 3.6V and are emptied to 3.1V, so only 0.5/3.6 = 14% of the energy stored in the buffer is used. By moving the bulk capacitor before the DC/DC converter (fig. 2), the capacitor can be scaled down. By moving this bulk capacitors before the DC-DC converter, a larger droop can be allowed, in this case up to 10V - 3.6V = 6.4V. This means that the bulk capacitor can be scaled down by a factor of (6.4V/0.5V) 12.8, resulting in only 500 µF. The advantage is that costs and size on the board can be reduced.

The scaling down and therefore as well the max voltage at C2 will be limited by the operating voltage class of the bulk capacitor and the IC technology in which the DC-DC converters are designed.

The buck converter might be exchanged for a boost+buck converter so that the minimum voltage at C2 could be even lower than 3.6V. At that occurrence the scaling down factor can be even higher.

The buck DC-DC converter of figure 2 has a settling time of 10 µs. In order to bridge this brief period at the beginning of each burst, a small capacitor C3 of 100 µF can be placed on output side of the buck DC-DC converter.

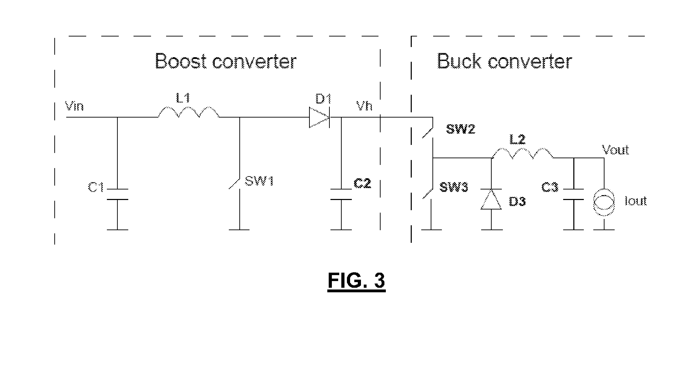

Figure 3 shows the buck and boost converters in more detail. Both are under control of a time controller which operates the switches SW1-SW3 according to predetermined duty-cycles which are determined in view of the desired voltage conversion. For the boost converter, for example a duty cycle of 50% is chosen. With SW1 closed, the input voltage source is placed over the inductor L1. This results in accumulating energy in L1. With SW1 opened, the inductor L1 is connected via diode D1 to the bulk capacitor C2, so the accumulated energy is transferred from L1 to C2. For the buck converter, for example a duty cycle of 33% is chosen. Upon a burst, likewise energy is transferred first from C2 to L2 and then on to the PA by appropriately controlling switches SW2-SW3.

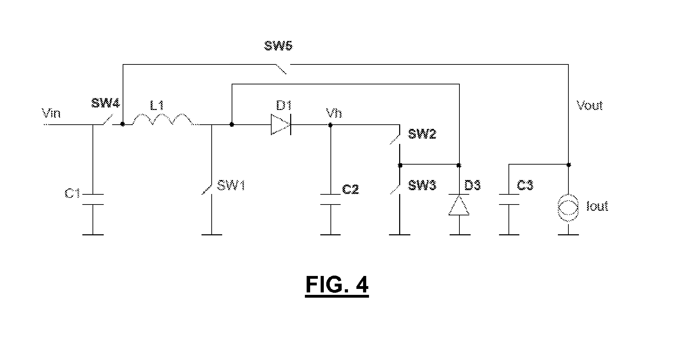

Figure 4 shows an alternative configuration in which the inductor L1 is shared between the boost and buck converters. SW1 is replaced by two switches SW4-SW5 to ensure separate operation of the boost and buck converters.

For both schemes, energy is accumulated in C2 during idle times (in between bursts) and the accumulated energy is passed on to the PA upon bursts.

## Claims

1. A computer peripheral wireless communication device comprising:
- a power interface for connection to a complementary power interface of a host computer device, such that the communication device takes input power from the host computer device to which it is connected;
- a power amplifier for amplifying transmission signals up to a desired transmission burst power level, the power amplifier requiring at times a high supply power above the input power which is available via the power interface;
- power conversion circuitry connected between the power interface and the power amplifier and being provided for converting the input power to the supply power for the power amplifier;
wherein the power conversion circuitry comprises:
- a bulk capacitance for temporary power storage and releasing power towards the power amplifier on occurrence of a voltage drop as a result of the power amplifier requiring the high supply power;
- a boost dc-dc-converter connected between the power interface and the bulk capacitance;
- a buck dc-dc-converter connected between the bulk capacitance and the power amplifier.

2. A computer peripheral wireless communication device according to claim 1, further comprising a timing controller for controlling switching components of the boost and buck dc-dc-converters.

3. A computer peripheral wireless communication device according to claim 2, wherein the timing controller is adapted to control the switching components of the boost and buck dc-dc-converters such that operation of the boost converter is separate from operation of the buck converter in time.

4. A computer peripheral wireless communication device according to claim 3, wherein the boost and buck dc-dc-converters have a shared coil (L1).

5. A computer peripheral wireless communication device according to any one of the previous claims, wherein the boost dc-dc-converter boosts an input voltage presented at its input to a charging voltage of at least twice the input voltage.

6. A computer peripheral wireless communication device according to any one of the previous claims, wherein a further boost dc-dc-converter is connected between the bulk capacitance and the buck dc-dc-converter.

7. A computer peripheral wireless communication device according to any one of the previous claims, further comprising a capacitor parallel over an output side of the buck dc-dc-converter for bridging a settling period of the buck dc-dc-converter.

8. A computer peripheral wireless communication device according to any one of the previous claims, comprising electronic components for communicating over two or more different wireless communication networks.
